# EUROPÄISCHE PATENTANMELDUNG

(11) **EP 2 133 385 A2**
(43) Veröffentlichungstag der Anmeldung: **16.12.2009**
(21) Anmeldenummer: 09005473.5
(22) Anmeldetag: 17.04.2009
(51) Int. Cl.: C08G 73/08

(54) **Herstellung von Komositen aus Polyxadiazol-Polymeren**

(30) Priorität: 10.06.2008 DE 102008027499
(71) Anmelder: GKSS-Forschungszentrum Geesthacht GmbH, 21502 Geesthacht (DE)
(72) Erfinder: De Figueiredo Gomes, Dominique, 21641 Apensen (DE); Loos, Marcio Rodrigo, 21502 Geesthacht (DE); Albuerne, Julio, 21029 Hamburg (DE)
(74) Vertreter: Grebner, Christian Georg Rudolf

(57) **Zusammenfassung**

Die Erfindung betrifft ein Verfahren zum Herstellen von Polyoxadiazol-Kompositen aus Polyoxadiazol-Homopolymeren und/oder -Copolymeren mittels einer, vorzugsweise direkten, Polykondensationsreaktion von A-A (Hydrazin und/oder dessen Derivate) Monomeren und B-B (Dicarboxylsäure und/oder deren Derivate) Monomeren mit einem Füllstoff in Polyphosphorsäure mit den folgenden Schritten:
a) der Füllstoff wird in der Polyphosphorsäure durch Erwärmen der Mischung, vorzugsweise unter einer Gasatmosphäre, funktionalisiert,
b) Hydrazin und/oder dessen Derivate und wenigstens eine Dicarboxylsäure und/oder deren Derivate werden mit der Mischung aus Verfahrensschritt a) zu einer Lösung gemischt,
c) die Lösung aus Verfahrensschritt b) wird, vorzugsweise unter einer inerten Atmosphäre, erhitzt und
d) die Polyoxadiazol-Kompositen werden in einer Lösung ausgefällt und insbesondere neutralisiert.

Darüber hinaus betrifft die Erfindung Polyoxadiazol-Komposite sowie die Verwendung von Polyoxadiazol-Kompositen.

## Beschreibung

Die Erfindung betrifft ein Verfahren zum Herstellen von Polyoxadiazol-Kompositen aus Polyoxadiazol-Homopolymeren und/oder -Copolymeren. Darüber hinaus betrifft die Erfindung Polyoxadiazol-Komposite sowie die Verwendung von Polyoxadiazol-Kompositen.

Polyoxadiazole weisen neben hoher chemischer und thermischer Stabilität hohe Glasübergangstemperaturen auf. Sie können direkt verarbeitet, z.B. zu Fasern versponnen werden, oder es können Beschichtungen aus ihnen hergestellt werden.

Polyoxadiazole werden in verschiedenen Lösungsmitteln synthetisiert. Ein bekanntes Beispiel ist die Synthese von Oleum, rauchender Schwefelsäure, als Lösungsmittel. Oleum stellt eine sehr toxische und korrosive Syntheseumgebung dar. Nach dem Ende der Synthesereaktion ist eine exzessive Neutralisierung des Mediums erforderlich. Die Synthese von Polyoxadiazol in Oleum ist beispielsweise in DD 292 919 A5 und DE 24 08 426 C2 beschrieben.

Beispielsweise besteht in der Luftfahrtindustrie ein Bedarf an leistungsfähigen Polymeren bzw. Polymerwerkstoffen. Insbesondere haben thermoplastische Polyoxadiazol-Polymere ein großes Potential als Konstruktionswerkstoff aufgrund ihrer mechanischen Eigenschaften. Hierzu wurde in US-A-5 118 781 vorgeschlagen, durch eine aromatische nucleophile Verdrängungsreaktion von Dihydroxylvinylmonomeren mit aromatischen Dihalogeniten oder aromatischen Dinitroverbindungen Poly(1,3,4-Oxadiazole) zu synthetisieren. Die Polymerisationen wurden in polaren, aprotischen Lösungen wie zum Beispiel Sulfonlane oder Diphynolsulfone unter Verwendung von Alkalimetallbasen wie zum Beispiel Kaliumkarbonat bei erhöhten Temperaturen durchgeführt.

Darüber hinaus wurden Polyoxadiazol-Komposite durch die Hinzufügung von Füllstoffen hergestellt (F.G. Souza et al., Journal of Applied Polymer Science 2004, 93, 1631-1637; M. Loos et al. Proceedings of the Eurofillers, Hungary (Zalakaros), 2007, 119-120; D. Gomes et al., Journal of Membrane Science (2008) doi: 10.1016/j. memsci. 2007.11.041). Überdies wurde in US 2008/0014440 A1 beschrieben, dass Polyoxadiazole durch die Hinzufügung einer flexiblen Kette von Nicht-Polyoxadiazol-Polymeren in die Polyoxadiazol-Matrix hergestellt werden.

Im Artikel von F.G. Souza et al. (Journal of Applied Polymer Science 2004, 93, 1631-1637) wurden leitfähige Polyoxazoldiazol-Komposite durch Dispergierung von Kohlenschwarzartikeln in Polyoxadiazollösungen in NMP (N-Methyl-2-Pyrrolidon) beschrieben. Da die Füllstoffe nicht funktionalisiert waren, wurden Agglomerate beobachtet. Außerdem haben die Kompositen mit einem höheren Anteil an Kohlenschwarz eine höhere heterogene Morphologie mit irregulären Brüchen gezeigt. Es zeigte sich, dass die Heterogenität starke Auswirkungen auf die Stabilität des Filmes hat.

Um die Bildung von Agglomeraten zu verhindern, wurde von M. Loos et al. (Proceedings of the Eurofillers, Hungary (Zalakaros), 2007, 119-120) vorgeschlagen, die Füllstoffe zunächst zu funktionalisieren. Hierzu wurden Nanokomposite in zwei Stufen hergestellt. Zunächst wurden Kohlenstoff-Nanoröhrchen (Carbon Nano Tubes (CNT)) in einer Polyphosphorsäure oxidiert. Anschließend wurden die funktionalisierten Kohlenstoff-Nanoröhrchen mit Hydroxyl und Carboxylgruppen zu einer Polyoxadiazolmatrix hinzugefügt, die in einem anderem Reaktionsprozess bzw. Batchprozess synthetisiert wurde.

Darüber hinaus haben D. Gomes et al., (Journal of Membrane Science (2008) doi: 10.1016/j. memsci. 2007.11.041) beschrieben, dass Polyoxadiazol mit funktionalisierten Siliciumdioxydpartikeln funktionalisiert wurde. Die Kompositen wurden in zwei Stufen hergestellt. Zunächst wurden die Monomere und die Siliciumdioxydpartikel über mehrere Tage, wie von D. Gomes et al. in J. Polym. Sci. Part B: Polym. Phys. 2006, 44, 2278-2298, beschrieben ist, funktionalisiert. Anschließend wurden die funktionalisierten Füllstoffe zu einer Polyoxadiazolmatrix hinzugefügt, die in einem anderen Reaktionsprozess synthetisiert wurde.

Außerdem haben Baek et al. (in Macromolecules 2004, 37, 8278-8285), S.-J. Oh et al. (in Polymer 2006, 47, 1132-1140) sowie D.H. Wang et al. (in Chem. Mater. 2008, 20, 1502-1515) Polymer(etherketone)-Komposite beschrieben, die über einen in-situ Syntheseprozess von A-B Monomeren in Polyphosphorsäure hergestellt wurden. Hierbei haben Baek et al. (in Macromolecules 2004, 37, 8278-8285) gezeigt, dass die synthetisierten Kompositen eine höhere Löslichkeit in starken Säuren als in gebräuchlichen organischen Lösungen aufwiesen. Von Oh et al. (Polymer 2006, 47, 1132-1140) wurden Komposite vorgestellt, die durch Aufpfropfung von Polyetherketonen auf mehrwandigen Kohlenstoff-Nanoröhrchen durch eine in-situ Polykondensation von A-B Monomeren hergestellt wurden.

Weiterhin haben Wang et al. (Chem. Mater. 2008, 20, 1502-1515) hyperverzweigte Poly(ether-ketone)-Komposite beschrieben, die eine bessere Löslichkeit, z.B. in aprotischen polaren Lösungsmitteln aufwiesen.

Ausgehend von diesem Stand der Technik besteht die Aufgabe der vorliegenden Erfindung darin, Polyoxadiazol-Polymere bereitzustellen, die auf einfache Weise herzustellen sind, wobei die Polyoxadiazolpolymere eine Beständigkeit bei hohen Temperaturen aufweisen sollen.

Gelöst wird diese Aufgabe durch ein Verfahren zum Herstellen von Polyoxadiazol-Kompositen aus Polyoxadiazol-Homopolymeren und/oder -Copolymeren mittels einer, vorzugsweise direkten, Polykondensationsreaktion von A-A (Hydrazin und/oder dessen Derivate) Monomeren und B-B (Dicarboxylsäure und/oder deren Derivate) Monomeren mit einem Füllstoff in Polyphosphorsäure, wobei die folgenden Schritten ausgeführt werden:
a) der Füllstoff wird in der Polyphosphorsäure durch Erwärmen der Mischung, vorzugsweise unter einer Gasatmosphäre, funktionalisiert,
b) Hydrazin und/oder dessen Derivate und wenigstens eine Dicarboxylsäure und/oder deren Derivate werden mit der Mischung aus Verfahrensschritt a) zu einer Lösung gemischt,
c) die Lösung aus Verfahrensschritt b) wird, vorzugsweise unter einer inerten Atmosphäre, erhitzt und
d) die Polyoxadiazol-Kompositen werden in einer Lösung ausgefällt und insbesondere neutralisiert.

Durch die erfindungsgemäßen Polyoxadiazol-Kompositen werden Polyoxadiazol-Polymere in einer einstufigen, in-situ Polykondensationsreaktion hergestellt, wobei die Polyoxadiazol-Polymere verbesserte mechanische Eigenschaften aufweisen. Es werden hierbei Komposite hergestellt, die anschließend in leitfähige, thermisch und chemisch stabile Membranen eingebaut werden.

Das Erhitzen der Polyphosphorsäure bzw. der Mischung im Verfahrensschritt a) erfolgt vorteilhafterweise-unter einer Gasatmosphäre, insbesondere einer Atmosphäre aus Stickstoff und/oder Argon mit oder ohne Wasseranteilen.

Darüber hinaus können aus den Polyoxadiazol-Kompositen Fasern oder Filme hergestellt werden, die für Trennprozesse bzw. Membrantrennprozesse eingesetzt werden. Außerdem können die erfindungsgemäß hergestellten Polyoxadiazol-Kompositen als Verstärkungsmittel, für die Herstellung von Sensoren, Elektroden oder für Beschichtungen und Leichtbau-Konstruktionswerkstoffe eingesetzt werden.

Die Herstellung der Polyoxadiazol-Komposite erfolgt mittels eines schnellen in-situ Syntheseprozesses, wobei die hergestellten Polyoxadiazole ein hohes (mittleres) Molekulargewicht zwischen 200.000 bis 424.000 Da aufwiesen. Hierbei sind die Polyoxadiazole in organischen Lösungsmitteln lösbar, die anschließend als Dichtefilme ohne Füllstoffagglomeration sehr gute thermische und mechanische Eigenschaften haben. Beispielsweise weisen die erzeugten Polyoxadiazol-Polymere bzw. -Komposite einen hohen Elastizitätsmodul bzw. Speichermodul von bis zu 6 GPa bei 150°C auf.

Dadurch, dass die Füllstoffe mit den Polyoxadiazol-Ketten funktionalisiert werden, ergibt sich eine bessere Dispersion der Füllstoffe in der Polyoxadiazol-Matrix, da die Füllstoffe mit den Polyoxadiazol-Ketten funktionalisiert werden. Außerdem zeichnet sich das Verfahren durch eine kurze bzw. kürzere Verfahrensdauer aus, da die Funktionalisierung der Füllstoffe und die Synthese der Polyoxadiazole in einem Reaktionsprozess bzw. Batch-Prozess erfolgen. Mit dem Begriff Dicarbonxylsäure(n) werden synonym Dicarbonsäure(n) bezeichnet.

Bevorzugterweise wird die Erwärmung der Mischung im Verfahrensschritt a) bei einer Temperatur zwischen 25°C bis 200°C, vorzugsweise bis 180°C, insbesondere zwischen 160°C und 180°C, ausgeführt. Hierbei wird der Füllstoff der Mischung in der Polyphosphorsäure funktionalisiert.

Bevorzugterweise wird überdies die Erhitzung der Lösung im Verfahrensschritt c) bei einer Temperatur zwischen 100°C bis 200°C, vorzugsweise bis 180°C, insbesondere zwischen 160°C und 180°C, ausgeführt. Außerdem wird die Erhitzung der Lösung im Verfahrensschritt c) für eine Zeitdauer von bis zu 48 Stunden, vorzugsweise von 3 Stunden bis 48 Stunden, insbesondere von 3 bis 16 Stunden, ausgeführt. Hierdurch ergibt sich eine schnelle Verfahrensdauer für die Herstellung von Polyoxadiazol-Polymeren bzw. -Kompositen.

In einer bevorzugten Ausgestaltung ist außerdem vorgesehen, dass im Verfahrensschritt b) Hydrazin in Form von Hydrazin-Salz, insbesondere Hydrazin-Sulfatsalz, zugemischt wird.

Darüber hinaus ist es günstig, wenn im Verfahrensschritt b) Dicarboxylsäure in Form von Dicarboxylsäuren mit zwei Carboxylsäuregruppen, vorzugsweise aromatische und/oder heteroaromatische Dicarboxylsäuren, und/oder deren Derivate zugemischt werden.

Im Rahmen der Erfindung ist es möglich, dass Dicarboxylsäure auch in Form von Dicarboxylsäurediesther oder Dicarboxylsäure/Dicarboxylsäurediesthermischungen im Verfahrensschritt b) zugegeben werden.

Bevorzugterweise besteht der Füllstoff aus Kohlenstoff-Nanoröhrchen (Carbon Nano Tubes (CNT)) und/oder molekularsiebendem Kohlenstoff und/oder Graphit und/oder pyrolisierten Polymerpartikeln und/oder anorganischen Partikeln und/oder Siliciumdioxid (Kieselerde) und/oder Aluminiumoxid (Tonerde) und/oder Titan und/oder Montmorillonit und/oder Silicaten und/oder Fullerenen und/oder Zeolith und/oder Aluminiumoxid und/oder Zinkoxid und/oder Polymerfasern und/oder Glasfasern.

Außerdem enthält die Mischung, insbesondere in Verfahrensschritt a) zusätzlich Hilfsmittel, Vernetzungsmittel, Weichmacher, Treibmittel, Schmiermittel, Surfactanten, Texturanten, Farbmittel, Pigmente, Glimmer, Flammhemmer, Stabilisatoren, Verstärkungsfasern, Haftförderer und/oder Mischungen davon. Hierdurch werden entsprechend die hergestellten Polyoxadiazol-Kompositen entsprechend den Anforderungen bei einer vorgesehenen Verwendung, z.B. in Bauteilen oder in Vorrichtungen, konfektioniert.

Bei dem erfindungsgemäßen Verfahren weist das Polyoxadiazol ein Polymer mit wenigstens einem konjugierten Ring mit zwei Stickstoffatomen und einem Sauerstoffatom auf, wobei insbesondere das Polymer eine Wiederholungseinheit der Struktur 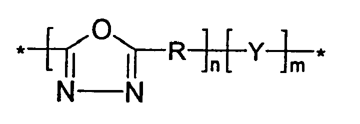 aufweist, wobei Y eine Gruppe mit der Struktur 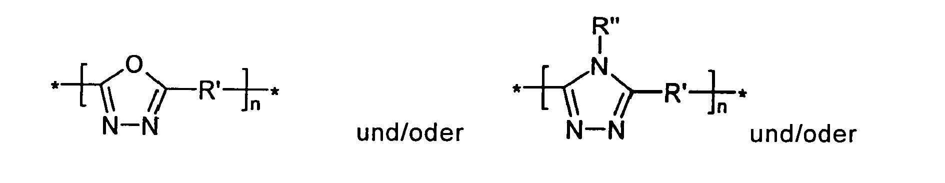 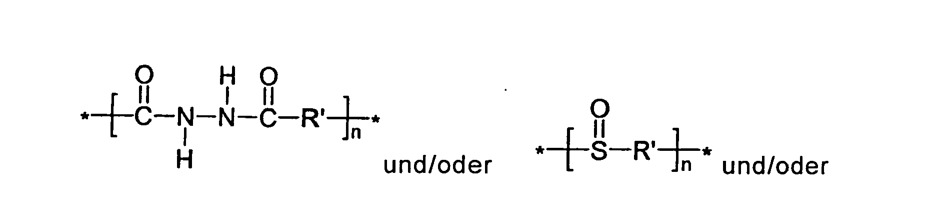 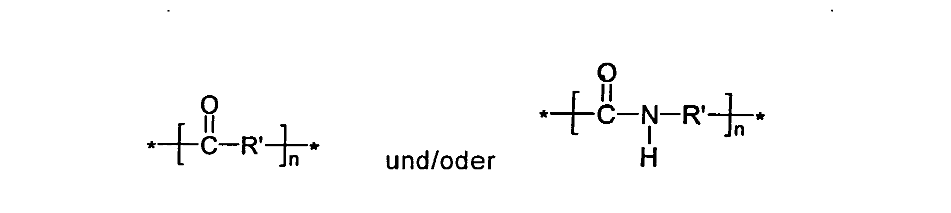 ist, wobei R und R' jeweils Gruppen mit 1 bis 40 Kohlenstoffatomen sind und R" ein Wasserstoffatom oder eine Gruppe mit 1 bis 40 Kohlenstoffatomen ist, wobei n und m natürliche ganze Zahlen sind, die jeweils größer als Null sind.

Darüber hinaus ist in einer Ausgestaltung vorgesehen, dass das Polyoxadiazol-Gemisch mit den Kompositen, insbesondere gemäß Verfahrensschritt c), in einem Lösemittel gelöst wird, wobei insbesondere in einem weiteren Verfahrensschritt hieraus ein Film oder eine Faser gegossen oder gebildet wird.

Außerdem werden in einem bevorzugten Verfahrensschritt die Polyoxadiazol-Kompositen in einer Lösung gelöst und unter Verwendung eines Kalanders, vorzugsweise mit drei Rollen, und/oder eines Mischers, vor dem Gießen zu einem Film oder Bilden einer Faser bearbeitet.

Vorzugsweise werden die Polyoxadiazol-Kompositen vor dem Gießen zu einem Film oder dem Bilden einer Faser geschmolzen werden.

Überdies wird die Aufgabe durch Polyoxadiazol-Komposite gelöst, die durch Ausführung der genannten Verfahrensschritte erhältlich sind. Zur Vermeidung von Wiederholungen wird auf die obigen Ausführungen ausdrücklich verwiesen. Darüber hinaus zeichnen sich die Polyoxadiazol-Kompositen dadurch aus, dass die Kompositen eine Zugfestigkeit bis zu 6 GPa, vorzugsweise bei 150 °C, aufweisen.

Bevorzugterweise weisen die Polyoxadiazol-Kompositen ein Molekulargewicht von wenigstens 200.000 Dalton auf. Bei erfindungsgemäß hergestellten Polyoxadiazol-Kompositen wurden mittlere Molekulargewichte von wenigstens 200.000 Dalton (Da) bis 424.000 Dalton (Da) gemessen.

Weiterhin wird die Aufgabe gelöst durch eine Verwendung von Polyoxadiazol-Kompositen, die gemäß dem voranstehend beschriebenen Verfahren hergestellt werden, zur Herstellung einer Membran oder einer Faser oder eines Films oder als Verstärkungsmittel oder zur Herstellung von Sensoren oder Elektroden oder als Beschichtung und Leichtbau-Konstruktionswerkstoff.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: ein Diagramm mit Darstellungen des durchschnittlichen molekularen Gewichts von fluoriertem Polyoxadiazol- Kompositen als Funktion der Reaktionszeit;
- Fig. 2a: eine Rasterelektronenmikroskopaufnahme von urs- prünglichen fluorierten Polyoxadiazolen,
- Fig. 2b: eine Rasterelektronenmikroskopaufnahme von erfin- dungsgemäßen fluorierten Polyoxadiazol-Kompositen,
- Fig. 3a: ein Ramanspektrum von Kohlenstoff-Nanoröhrchen (CNT),
- Fig. 3b: ein Ramanspektrum von erfindungsgemäßen Polyoxa- diazol-Kompositen mit 10 Gew.-% ,
- Fig. 4: eine Rasterelektronenmikroskopaufnahme eines Polyo- xadiazol-Kompositfilms mit einem Gew.-% Kohlenstoff- Nanoröhrchen (CNT) und
- Fig.5: ein Diagramm einer dynamisch-mechanisch-ther- mischen Analyse (DMTA (Dynamic Mechanical Thermal Analysis)) von Polyoxadiazol-Kompositfilmen.

### Beispiel 1

### Synthese von fluorierten Polyoxadiazol-Kompositen

Zunächst wird Polyphosphorsäure (PPA) in einen Kolben gegeben und auf 60°C unter einer trockenen Stickstoffatmosphäre erhitzt. Anschließend werden Kohlenstoff-Nanoröhrchen (Carbon Nano Tubes (CNT)) zu der Polyphosphorsäure hinzugefügt und durch Umrühren und Aufheizen auf 160°C homogenisiert. Nach 3 Stunden der Funktionalisierung der Kohlenstoff-Nanoröhrchen wird Hydrazinsulfatsalz (HS, > 99%, Aldrich) zu der Mischung hinzugefügt. Nach Auflösung des Hydrazinsulfatsalzes wird 4,4'-Dicarboxylphenyl-Hexafluoropropan (HF, 99%, Aldrich), hinzugegeben.

Die molare Verdünnungsrate (PPA/HS) und die molare Monomerrate (HS/HF) wurden konstant gehalten und entsprachen 10 bzw. 1,2.

Nach einer Reaktionszeit von 3 bis 48 Stunden wurde das Rekationsmedium in Wasser mit 5 Gew.-% von Natriumhydroxyd (99%, Vetech) zur Ausfällung des Polymers gegeben. Hierbei wurde der pH-Wert der Polymersuspension, wie in der Literatur beschrieben (Gomes et al., Polymer 2004, 45, 4997-5004), kontrolliert.

Die mit einer Ausbeute von 97 % erhaltenen Polyoxadiazol-Kompositen sind in den Lösungen NMP (N-Methyl-2-Pyrrolidon) und DMSO (Dimethylsulfoxid) löslich. Das durchschnittliche molekulare Gewicht der Kompositen wurde mittels Größenausschlusschromotographie (Size Exclusion Chromotograhy (SEC)) im Bereich von 200.000 bis 280.000 Da bei einer Ausbeute von 97 bis 99 % ermittelt. Hierzu wurde ein Chromatograph von Viscotek mit Eurogel-Trennsäulen SEC 10.000 und PSS Gram 100, 1000 mit den Seriennummern HC286 und 1515161 und einer Größe von 8 x 300 mm eingesetzt, um das durchschnittliche molekulare Gewicht der Polymerproben zu ermitteln.

Die Vorrichtung wurde unter Verwendung von Polystyrenstandards (Merck) mit einem durchschnittlichen molekularen Gewicht zwischen 309 bis 944.000 g/Mol. kalibriert. Eine Lösung mit 0,05 M Lithiumbromid in DMAc (Dimethylacetamid) wurde als Träger verwendet. Lösungen mit 0,5 Gew.-% der Polyoxadiazol-Kompositen wurden vorbereitet gefiltert (0,2 µm) und in den Chromatographen injiziert.

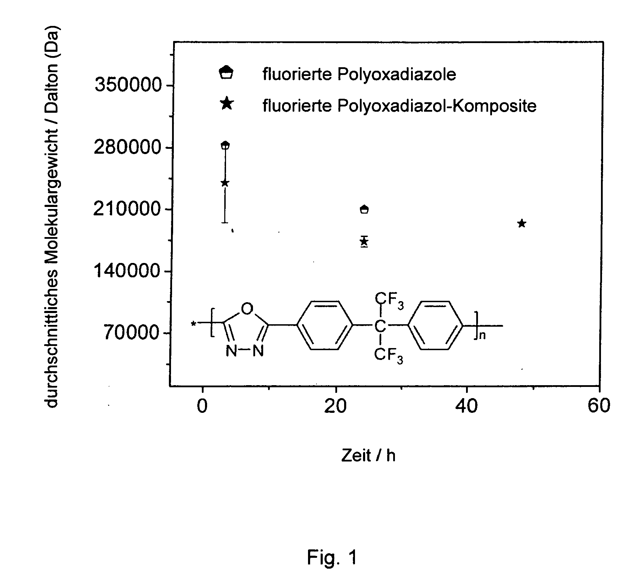

Wie aus Fig. 1 ersichtlich, wurde bereits nach einer Reaktionszeit von 3 Stunden ein hohes molekulares Gewicht erzielt.

### Rasterelektronenmikroskop-Analyse

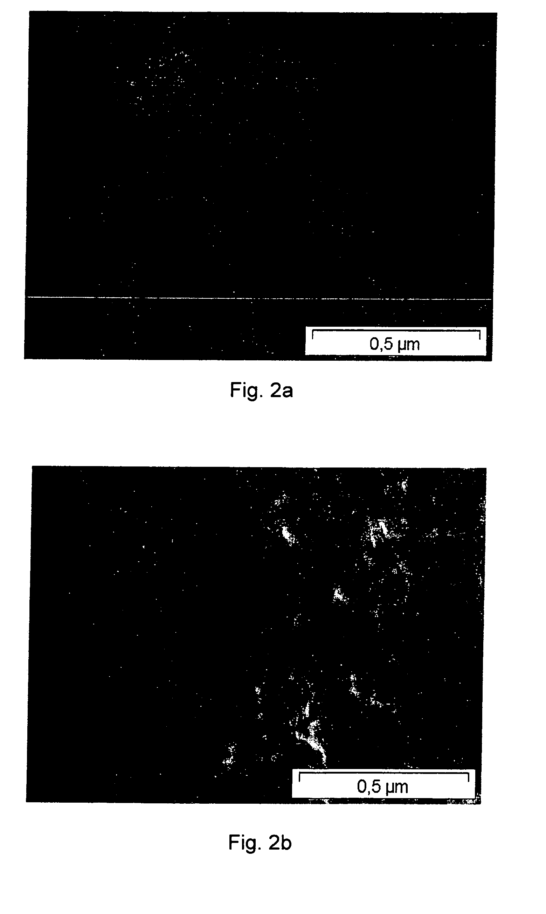

Die Morphologie der Polyoxadiazol-Kompositen wurde mit einem Rasterelektronenmikroskops des Typs LEO 1550VP untersucht. Die Proben wurden vorher mit Gold in einer Sputter-Einrichtung beschichtet bzw. gesputtert. In den Rasterelektronenmikroskopaufnahmen ist die Struktur von fluorierten Polyoxadiazolen (Fig. 2a) und von erfindungsgemäß hergestellten Polyoxadiazol-Kompositen (Fig. 2b) erkennbar.

Aus den beiden Aufnahmen ist erkennbar, dass die ursprüngliche Struktur des hochhydrophoben, fluorierenden Polyoxadiazol (Fig. 2a) abgenommen hatte bzw. verlorenging als Ergebnis des Aufpfropfens der Polymere auf die Oberfläche der Kohlenstoff-Nanoröhrchen (CNT).

### Beispiel 2

### Synthese von Polyoxadiazol-Kompositen

Zunächst wurde Polyphosphorsäure (PPA) in einen Kolben gegeben und auf 60°C unter einer trockenen Stickstoffatmosphäre erhitzt. Anschließend wurden die Kohlenstoff-Nanoröhrchen (CNT) in die Polyphosphorsäure hinzugegeben und durch Rühren und Aufheizen auf 160°C homogenisiert. Nach einer Stunde der Funktionalisierung der Kohlenstoff-Nanoröhrchen wurde Hydrazinsulfatsalz HS (>99%, Aldrich) zu der Mischung hinzugegeben. Anschließend wurde nach Auflösung des Hydrazinsulfatsalzes Dicarboxyldiazid-4,4'-Diphenylether (DPE, 99%, Aldrich) hinzugefügt.

Das molare Verdünnungsverhältnis (PPA/HS) und die molare Monomerrate (HS/DPE) wurden bei 10 bzw. 1,2 konstant gehalten. Nach einer Reaktionszeit von 3 Stunden wurde das Reaktionsmedium in Wasser mit 5 Gew.-% Natriumhydroxid (99%, Vetech) gegeben, um das Polymer auszufällen. Der pH-Wert dieser Polymersuspension wurde nach dem bekannten Verfahren (Gomes et al. Polymer 2004, 45, 4997-5004) kontrolliert.

Die Polyoxadiazol-Kompositen, die löslich in den Lösungsmitteln NMP und DMSO sind, wurden mit einer Ausbeute von 97 % erhalten. Das durchschnittliche molekulare Gewicht der Komposite wurde durch SEC auf 424.000 Da bestimmt.

### Ramanspektroskopie

Von den Polymerproben wurden anschließend Ramanspektren aufgenommen. Hierbei wurden die Ramanspektren auf einem FT-Raman Modul RAMII unter Verwendung eines Nd:YAG-Lasers, der bei 1.064 nm angeregt wurde, aufgezeichnet.

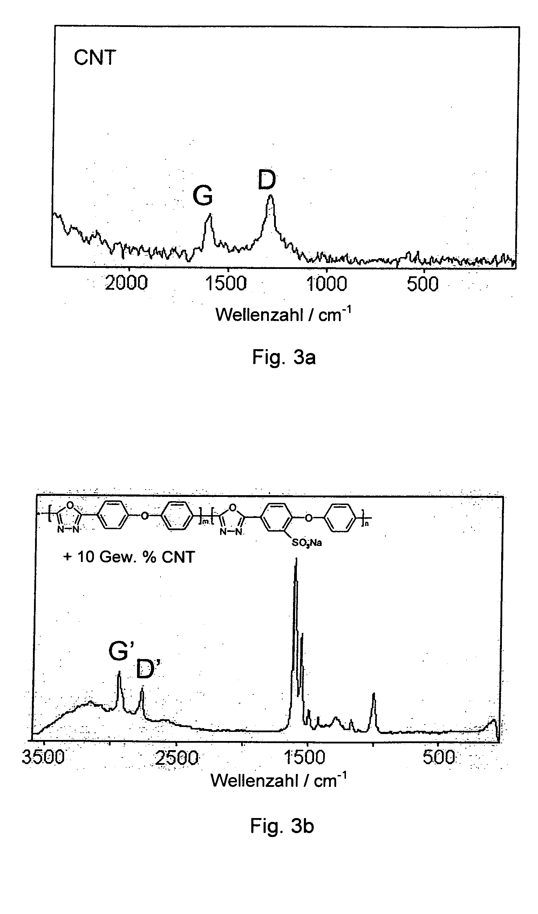

Fig. 3a zeigt das Ramanspektrum von Kohlenstoff-Nanoröhrchen (CNT) und Fig. 3b das Ramanspektrum von Polyoxadiazol-Kompositen mit 10 Gew.-% CNT.

Wie aus Fig. 3a ersichtlich, wurden die D- und G-Bänder von den Kohlenstoff-Nanoröhrchen bei ca. 1.300 cm⁻¹ und 1.600 cm⁻¹, die jeweils auf Defekte und Moden von Graphik zurückzuführen sind, sowohl für die (ursprünglichen) Kohlenstoff-Nanoröhrchen (Fig. 3a) und für die Polyoxadiazol-Komposite (Fig. 3b) beobachtet.

Nach der Funktionalisierung der Kohlenstoff-Nanoröhrchen mit Polyoxadiazol (Fig. 3b) wurden Banden bei 1613 cm⁻¹, 1506 cm⁻¹, 1290 cm⁻¹, 1168 cm⁻¹ und 997 cm⁻¹ beobachtet, die auf die aromatischen Gruppen in den Hauptketten des Polyoxadiazols zurückzuführen sind. Ein Band bei 1497 cm⁻¹ wurde aufgrund des Oxadiazolrings ebenfalls beobachtet. Darüber hinaus tauchten die Bänder 2. Ordnung G' und D' für die Kohlenstoff-Nanoröhrchen bei 2940 cm⁻¹ bzw. bei 2760 cm⁻¹ (Fig. 3b) auf.

### Beispiel 3

### Filmpräparation

Homogene Filme wurden aus den Polyoxadiazol-Kompositlösungen mit einer Konzentration von 4 Gew.-% in DMSO gegossen. Nach dem Gießen wurde DMSO in einem Vakuumofen bei 60°C für eine Zeitdauer von 24 Stunden verdampft. Zur Entfernung von Restrückständen am Lösungsmittel wurden die Filme in ein Wasserbad bei 50°C für 48 Stunden eingetaucht und anschließend in einem Vakuumofen bei 60°C 24 Stunden lang getrocknet. Die endgültige Dicke der Filme betrug ungefähr 70 µm.

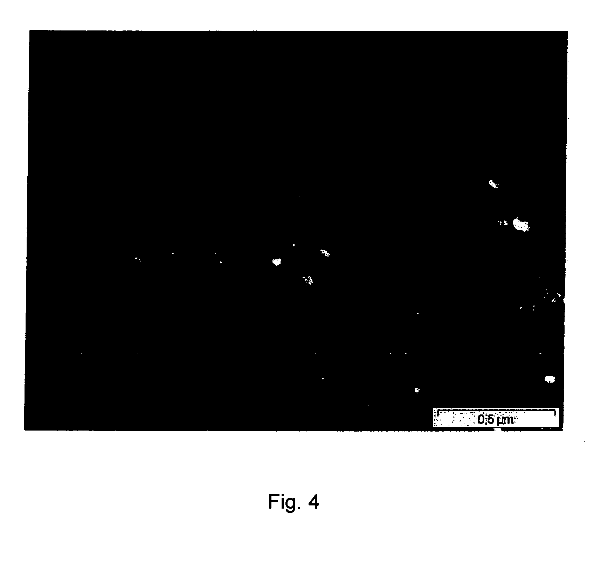

In Fig. 4 ist eine Rasterelektronenmikroskopaufnahme eines dichten Polyoxadiazol-Kompositfilms mit 1 Gew.-% CNT ohne Agglomerate gezeigt.

### Thermische und mechanische Analyse

Die dynamische mechanische thermische Analyse (DMTA) wurde zur Bestimmung des Speichermoduls eingesetzt. Die DMT-Analyse wurde unter Verwendung eines TA-Instruments RSA II mit einem Filmspannungsmode bei einer Frequenz von 1 Hz und einer anfänglichen statischen Kraft von 0,1 N ausgeführt. Die Temperatur wurde von 150°C auf 500°C mit einer Heizrate von 2° / min und einer konstanten Spannung von 0,05 % geändert.

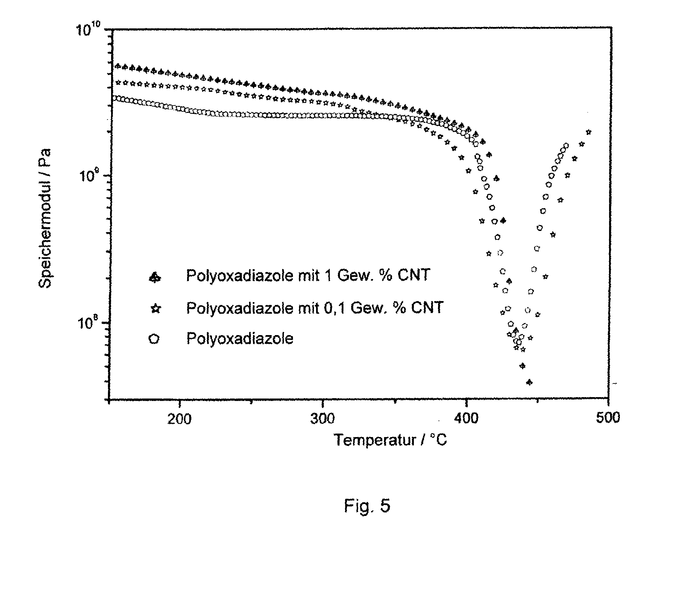

In Fig. 5 sind die Schaubilder der DMT Analyse von ursprünglichem Polyoxadiazol sowie von Polyoxadiazol-Kompositen mit 0,1 Gew.-% CNT und 1 Gew.-% CNT dargestellt. Das Schaubild in Fig. 5 zeigt deutlich die gute Stabilität der erfindungsgemäßen Polyoxadiazol-Kompositfilme und der hohe Speichermodul für diese Polyoxadiazol-Komposite mit einer hohen Konzentration (1 Gew.-% CNT) beträgt ungefähr 6 GPa bei 150°C.

## Patentansprüche

1. Verfahren zum Herstellen von Polyoxadiazol-Kompositen aus Polyoxadiazol-Homopolymeren und/oder -Copolymeren mittels einer, vorzugsweise direkten, Polykondensationsreaktion von A-A (Hydrazin und/oder dessen Derivate) Monomeren und B-B (Dicarboxylsäure und/oder deren Derivate) Monomeren mit einem Füllstoff in Polyphosphorsäure mit den folgenden Schritten:
a) der Füllstoff wird in der Polyphosphorsäure durch Erwärmen der Mischung, vorzugsweise unter einer Gasatmosphäre, funktionalisiert,
b) Hydrazin und/oder dessen Derivate und wenigstens eine Dicarboxylsäure und/oder deren Derivate werden mit der Mischung aus Verfahrensschritt a) zu einer Lösung gemischt,
c) die Lösung aus Verfahrensschritt b) wird, vorzugsweise unter einer inerten Atmosphäre, erhitzt und
d) die Polyoxadiazol-Kompositen werden in einer Lösung ausgefällt und insbesondere neutralisiert.

2. Verfahren nach Anspruch 1, **dadurch gekennzeichnet, dass** die Erwärmung der Mischung im Verfahrensschritt a) bei einer Temperatur zwischen 25°C bis 200°C, vorzugsweise bis 180°C, insbesondere zwischen 160°C und 180°C, ausgeführt wird.

3. Verfahren nach Anspruch 1 oder 2, **dadurch gekennzeichnet, dass** die Erhitzung der Lösung im Verfahrensschritt c) bei einer Temperatur zwischen 100°C bis 200°C, vorzugsweise bis 180°C, insbesondere zwischen 160°C und 180°C, ausgeführt wird.

4. Verfahren nach einem der Ansprüche 1 bis 3, **dadurch gekennzeichnet, dass** die Erhitzung der Lösung im Verfahrensschritt c) für eine Zeitdauer von bis zu 48 Stunden, vorzugsweise von 3 Stunden bis 48 Stunden, insbesondere von 3 bis 16 Stunden, ausgeführt wird.

5. Verfahren nach einem der Ansprüche 1 bis 4, **dadurch gekennzeichnet, dass** im Verfahrensschritt b) Hydrazin in Form von Hydrazin-Salz, insbesondere Hydrazin-Sulfatsalz, zugemischt wird.

6. Verfahren nach einem der Ansprüche 1 bis 5, **dadurch gekennzeichnet, dass** im Verfahrensschritt b) Dicarboxylsäure in Form von Dicarboxylsäuren mit zwei Carboxylsäuregruppen, vorzugszugsweise aromatische und/oder heteroaromatische Dicarboxylsäuren, und/oder deren Derivate zugemischt werden.

7. Verfahren nach einem der Ansprüche 1 bis 6, **dadurch gekennzeichnet, dass** der Füllstoff aus Kohlenstoff-Nanoröhrchen (CNT) und/oder molekularsiebendem Kohlenstoff und/oder Graphit und/oder pyrolisierten Polymerpartikeln und/oder anorganischen Partikeln und/oder Silicium und/oder Aluminium und/oder Titan und/oder Montmorillonit und/oder Silicaten und/oder Fullerenen und/oder Zeolith und/oder Aluminiumoxid und/oder Zinkoxid und/oder Polymerfasern und/oder Glasfasern besteht.

8. Verfahren nach einem der Ansprüche 1 bis 7, **dadurch gekennzeichnet, dass** die Mischung zusätzlich Hilfsmittel, Vernetzungsmittel, Weichmacher, Treibmittel, Schmiermittel, Surfactanten, Texturanten, Farbmittel, Pigmente, Glimmer, Flammhemmer, Stabilisatoren, Verstärkungsfasern, Haftförderer und/oder Mischungen davon enthält.

9. Verfahren nach einem der Ansprüche 1 bis 8, **dadurch gekennzeichnet, dass** das Polyoxadiazol ein Polymer mit wenigstens einem konjugierten Ring mit zwei Stickstoffatomen und einem Sauerstoffatom aufweist, wobei insbesondere das Polymer eine Wiederholungseinheit der Struktur 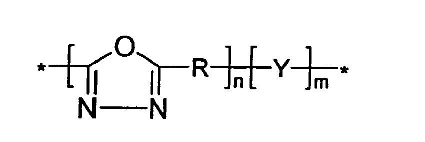 aufweist, wobei Y eine Gruppe mit der Struktur 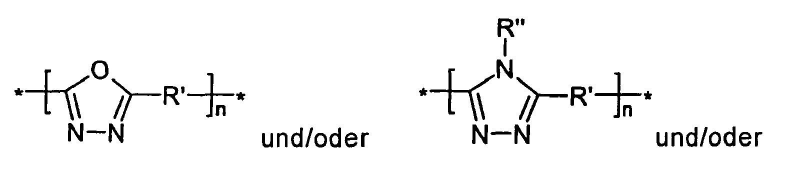 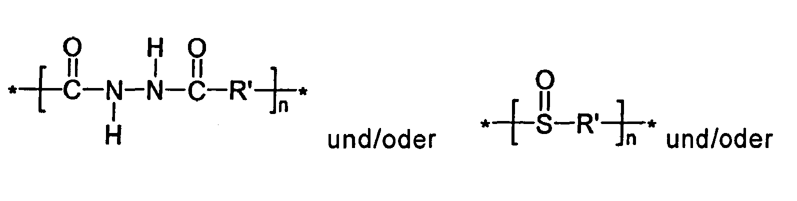 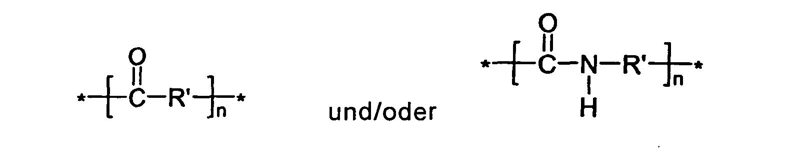 ist, wobei R und R' jeweils Gruppen mit 1 bis 40 Kohlenstoffatomen sind und R" ein Wasserstoffatom oder eine Gruppe mit 1 bis 40 Kohlenstoffatomen ist, wobei n und m natürliche ganze Zahlen sind, die jeweils größer als Null sind.

10. Verfahren nach einem der Ansprüche 1 bis 9, **dadurch gekennzeichnet, dass** das Polyoxadiazol-Gemisch in einem Lösemittel gelöst wird, wobei insbesondere in einem weiteren Verfahrensschritt ein Film oder eine Faser gegossen oder gebildet wird.

11. Verfahren nach einem der Ansprüche 1 bis 10, **dadurch gekennzeichnet, dass** die Polyoxadiazol-Kompositen in einer Lösung gelöst werden und unter Verwendung eines Kalanders, vorzugsweise mit drei Rollen, und/oder eines Mischers, vor dem Gießen zu einem Film oder Bilden einer Faser bearbeitet werden.

12. Verfahren nach einem der Ansprüche 1 bis 11, **dadurch gekennzeichnet, dass** die Polyoxadiazol-Kompositen vor dem Gießen zu einem Film oder dem Bilden einer Faser geschmolzen werden.

13. Polyoxadiazol-Komposite, erhältlich durch Ausführung der Verfahrensschritte gemäß den Ansprüchen 1 bis 12.

14. Polyoxadiazol-Komposite nach Anspruch 13, **dadurch gekennzeichnet, dass** die Zusammensetzung eine Zugfestigkeit bis zu 6 GPa, vorzugsweise bei 150°C, aufweist und/oder dass die Komposite ein Molekulargewicht von wenigstens 200.000 Dalton (Da) aufweist.

15. Verwendung von Polyoxadiazol-Kompositen, die nach einem der Ansprüche 1 bis 12 hergestellt werden, zur Herstellung einer Membran oder einer Faser oder eines Films oder als Verstärkungsmittel oder zur Herstellung von Sensoren oder Elektroden oder als Beschichtung und Leichtbau-Konstruktionswerkstoff.
